# EUROPÄISCHE PATENTSCHRIFT

(11) **EP 1 711 570 B1**
(45) Veröffentlichungstag und Bekanntmachung des Hinweises auf die Patenterteilung: **23.04.2008**
(21) Anmeldenummer: 05706728.2
(22) Anmeldetag: 01.02.2005
(51) Int. Cl.: C09J 7/02, C09J 7/00

(54) **TRENNSCHICHTTRÄGER**
INTERLAYER SUPPORT
SUPPORT DE COUCHE DE SEPARATION

(30) Priorität: 06.02.2004 DE 202004001802 U; 22.07.2004 DE 102004035697
(43) Veröffentlichungstag der Anmeldung: 18.10.2006
(73) Patentinhaber: Ludwig, Peter, 83064 Raubling (DE)
(72) Erfinder: Ludwig, Peter, 83064 Raubling (DE)
(86) Internationale Anmeldenummer: PCT/DE2005/000148
(87) Internationale Veröffentlichungsnummer: WO 2005/075592

(56) Entgegenhaltungen:
- US-A- 5 362 516
- US-B1- 6 197 397

## Beschreibung

Die Erfindung betrifft einen Trennschichtträger mit einem flächigen Substrat und einer darauf aufgebrachten Trennschicht. Der Trennschichtträger ist geeignet, Selbsthaftklebematerial mit einer Schicht Haftkleber zu hinterlegen. Er weist eine Reliefstruktur mit erhabenen Stegen auf, die in der Schicht Haftkleber im wesentlichen komplementäre Kanäle bilden, die beim Aufkleben eingesperrte Luft entweichen lassen.

Selbsthaftklebematerialien sind aus der Praxis vielfältig bekannt. Sie haben üblicherweise eine Ansichtsseite, die durchsichtig, durchscheinend, undurchsichtig (opak), ein- oder mehrfarbig sein und/oder eine beliebige Information tragen kann, und eine Schicht Haftkleber an der Rückseite. Der Haftkleber ist vor dem Aufkleben mit einem Trennschichtträger (Release Liner) abgedeckt. Zum Aufkleben wird der Trennschichtträger abgezogen und das Selbsthaftklebematerial mit der Haftkleberschicht an einem zu beklebenden Untergrund festgesetzt.

Speziell bei großflächigen, luftundurchlässigen Selbsthaftklebematerialien z. B. mit einer Kunststoff-Folie an oder hinter der Ansichtsseite entsteht dadurch ein Problem, daß beim Aufkleben Luft eingesperrt wird, die Blasen bildet und einen vollflächigen Klebekontakt mit dem Untergrund verhindert. Das äußere Erscheinungsbild flexibler Selbsthaftklebematerialien kann durch die Luftblasen oder unerwünschte Löcher und/oder Falten beeinträchtigt werden, die bei dem Versuch entstehen, die Luftblasen auszubügeln.

Zur Vermeidung von Luftblasen beim Aufkleben ist es bekannt, dem Trennschichtträger (Release Liner) eines Selbsthaftklebematerials eine Reliefstruktur mit erhabenen Stegen zu verleihen, die nach dem Abziehen des Trennschichtträgers in der Haftkleberschicht zumindest temporär Kanäle hinterlassen, durch die eingesperrte Luft entweichen kann.

Bei der EP 0 951 518 B1 wird zu diesem Zweck ein Trennschichtträger aus mit Polyethylen beschichtetem Papier und einer Silikontrennschicht in einem zusätzlichen Arbeitsgang geprägt (vgl. EP 0 951 518 B1 Beispiele 43 bis 49). Die Reliefstruktur hat zwei Scharen gerader, parallel in gleichem Abstand verlaufender Stege, die sich kreuzen und ein regelmäßiges Rautenmuster mit Rauten gleicher Form und Größe bilden.

Aufgabe der Erfindung ist es, einen Trennschichtträger der eingangs genannten Art mit einer Reliefstruktur zu schaffen, die beim Aufkleben eingesperrte Luft besser entweichen läßt.

Bei dem diese Aufgabe lösenden Trennschichtträger ist die Reliefstruktur eine unregelmäßige Polygonstruktur mit stochastisch geformten und verteilten, eckverbundenen, vier- bis siebeneckigen Polygonen.

Bei einer bevorzugten Ausführungsform hat die Reliefstruktur Stege mit einer Breite von 50 µm bis 200 µm und einer Höhe von 5 µm bis 40 µm.

Bei einer bevorzugten Ausführungsform nimmt ein jedes Polygon eine Fläche von 0,5 mm² bis 3 mm² ein.

Bei einer bevorzugten Ausführungsform ist ein vorzugsweise aus Papier oder Kunststoff-Folie bestehendes Substrat mit Kunststoff beschichtet und die Reliefstruktur in der Kunststoffbeschichtung ausgebildet. Die Reliefstruktur kann insbesondere durch Abkühlen einer auf das Substrat aufextrudierten Kunststoffbeschichtung an einem Kühlzylinder mit zu den Stegen komplementären Vertiefungen erhalten sein. Zum Aufbringen der Trennschicht wird das Substrat in herkömmlicher Weise über die volle Fläche homogen silikonisiert.

Trennschichtträger mit einem Substrat aus kunststoffbeschichtetem Papier haben wegen relativ hoher Gestehungskosten an dem Gesamtmarkt der Trennschichtträger nur einen Anteil von ca. 10 %. Bei dem Gros der Trennschichtträger besteht das Substrat aus gestrichenem Papier, Silikon-Rohpapier (hochverdichtetem, superkalandrierten "Glassine-Papier") und Kunststoff-Folien.

Ein Aspekt der Erfindung ist es, ein Substrat aus gestrichenem Papier für einen Trennschichtträger tauglich zu machen, der in der Haftkleberschicht eines damit hinterlegten Selbsthaftklebematerials Kanäle bildet, die beim Aufkleben eingesperrte Luft entweichen lassen.

Ein erster Lösungsansatz dazu ist, die Reliefstruktur des Substrats ganz oder zum Teil durch den Strich des Papiers selbst zu bilden. Man wendet dazu das Gußstreichverfahren an, durch das ein Rohpapier herkömmlicherweise mit einem Clay-Strich oder Pigment-Strich veredelt wird, um eine glatte und/oder glänzende Oberfläche zu erzielen. Das Gußstreichverfahren ist ein kombiniertes Streich-, Glätt- und Trockenverfahren, bei dem das frisch gestrichene Papier über einen Trockenzylinder geführt wird. Zur Herstellung der gewünschten Reliefstruktur kann der Trockenzylinder mit einer komplementären Struktur graviert oder geätzt sein.

Ein zweiter Lösungsansatz ist, die Reliefstruktur des Substrats ganz oder zum Teil durch einen Aufdruck auf den Strich des Papiers zu bilden. Diese Maßnahme kann mit der zuvor behandelten Ausbildung der Reliefstruktur durch den Strich selbst kombiniert werden.

Die Bedruckbarkeit und Silikonisierfähigkeit von Papier durch Streichen zu verbessern, ist allgemein bekannt. Auch gibt es einen umfangreichen Stand der Technik zum Drucken von Reliefstrukturen beispielsweise für Blindenschrift oder dekorative Zwecke (z. B. Tapeten, Trennpapiere für die Herstellung von Kunstleder). Die verwendeten Druckfarben sind teils thermisch aufblähend, teils hochviskos und schnell UVvernetzend. Für die Erfindung gibt dieser Stand der Technik nicht viel her. Zum einen sind die herkömmlicherweise aufgedruckten Reliefstrukturen sehr grob, und zum anderen die verwendeten Druckfarben mit der auf das Substrat aufzubringenden Trennschicht allenfalls bedingt kompatibel. Für die Trennschicht kommen spezielle Silikonsysteme zum Einsatz, die thermisch oder strahlungsvernetzend sein können, als Emulsion oder Lösung mit verschiedenen Lösungsmitteln oder als lösungsmittelfreies Festsilikon aufgebracht werden und in ihrer Trennwirkung durch Fremdchemikalien nur zu leicht inhibiert werden, speziell im Sinn einer unerwünscht verminderten chemischen Vernetzung und Haftung des Silikons ("smear", "rub-off", "peel-off"). Zu berücksichtigen sind dabei thermische Einflüsse und Langzeiteffekte. Die Realisierung einer auf gestrichenes Papier aufgedruckten Reliefstruktur für die Zwecke der vorliegenden Erfindung bedurfte der umfangreichen Forschung nach silikonverträglichen Druckfarben und geeigneten Drucktechniken.

Bei einer bevorzugten Ausführungsform besteht das Substrat aus mit Kunststoff beschichtetem Papier, Kunstoff-Folie oder mit Kunststoff beschichteter Kunststoff-Folie. Das Substrat kann mit der Kunststoffbeschichtung dispersionsbeschichtet, laminiert oder extrusionsbeschichtet sein. Die Reliefstruktur wird von einem Aufdruck auf den Kunststoff gebildet.

Bei einer weiteren Ausführungsform ist das aus Papier oder Kunststoff-Folie bestehende Substrat des Trennschichtträgers mit der Trennschicht bedruckt, um diese vollflächig und mit der erfindungsgemäßen Reliefstruktur auf das Substrat aufzubringen. Die Drucktechnik ermöglicht es, die Trennschicht entsprechend zu strukturieren. Druckmaterial sind modifizierte Silikonsysteme oder mit Silikon modifizierte Druckfarben.

Nach alledem kann man einerseits dem Substrat des Trennschichtträgers die erfindungsgemäße Reliefstruktur verleihen und das Substrat in herkömmlicher Weise homogen silikonisieren und andererseits eine Trennschicht mit der Reliefstruktur auf ein homogenes Substrat aufdrucken. Gegenstand der Erfindung sind gleichermaßen die so erhaltenen Trennschichtträger (Release Liner) und damit hinterlegte Selbsthaftklebematerialien.

Die Erfindung wird im folgenden anhand von in der Zeichnung dargestellten Ausführungsbeispielen näher erläutert. Es zeigen:
- Fig. 1: die schematische Seitenansicht eines Trennschichtträgers mit einem Substrat aus gestrichenem Papier und einer erhabenen Reliefstruktur, die von dem Strich des Papiers gebildet ist;
- Fig. 2: die schematische Seitenansicht eines Selbsthaftklebematerials mit dem Trennschichtträger gemäß Fig. 1;
- Fig. 3: die schematische Seitenansicht eines Trennschichtträgers mit einem Substrat aus gestrichenem Papier und einer darauf aufgedruckten erhabenen Reliefstruktur;
- Fig. 4: die schematische Seitenansicht eines Trennschichtträgers mit einem Substrat aus gestrichenem Papier und einer darauf aufgedruckten Trennschicht, die eine Reliefstruktur aufweist; und
- Fig. 5: eine Draufsicht auf die Reliefstruktur, die unregelmäßigpolygonal mit stochastisch variierender Form und Verteilung eckverbundener Polygone ist, die vier bis sieben Ecken haben.

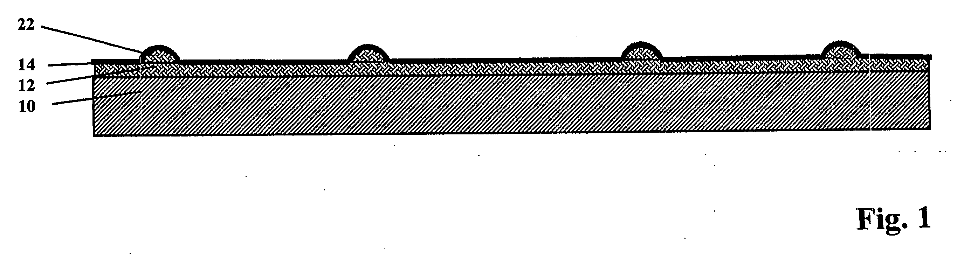

Der in Fig. 1 gezeigte Trennschichtträger hat ein flächiges Substrat 10 aus gestrichenem Papier, dessen Strich 12 eine erhabene Reliefstruktur 22 bildet. Über dem Substrat 10 liegt vollflächig eine Trennschicht 14 aus Silikon.

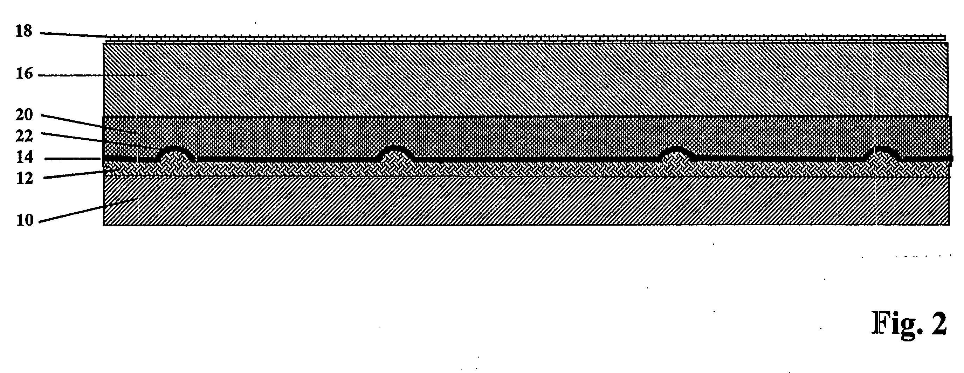

Fig. 2 zeigt ein Selbsthaftklebematerial, bei dem ein Druckträger 16 mit einem ansichtsseitigen Aufdruck 18 an der Rückseite mit Haftkleber beschichtet und die Schicht 20 Haftkleber mit dem erwähnten Trennschichtträger hinterlegt ist.

Fig. 1 und Fig. 2 repräsentieren genauso einen Trennschichtträger, der ein flächiges Substrat 10 aus Papier oder Kunststoff-Folie hat, auf das eine Kunststoffschicht 12 mit einer erhabenen Reliefstruktur aufextrudiert ist.

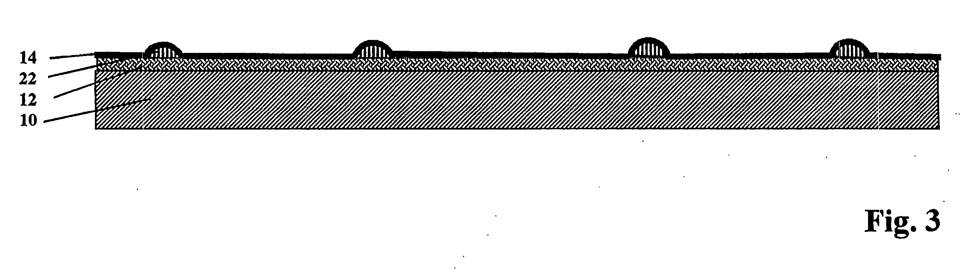

Der in Fig. 3 gezeigte Trennschichtträger hat ein flächiges Substrat 10 aus gestrichenem Papier, auf dessen ebenen, vollflächigen Strich 12 eine Reliefstruktur 22 aufgedruckt ist. Darüber liegt vollflächig eine Trennschicht 14 aus Silikon.

Fig. 3 repräsentiert genauso einen Trennschichtträger, der ein flächiges Substrat 10 aus Papier oder Kunststoff-Folie hat. Das Substrat ist mit einer ebenen, vollflächigen Kunststoffschicht 12 dispersionsbeschichtet, laminiert oder extrusionsbeschichtet. Auf die Kunststoffschicht 12 ist eine Reliefstruktur 22 aufgedruckt.

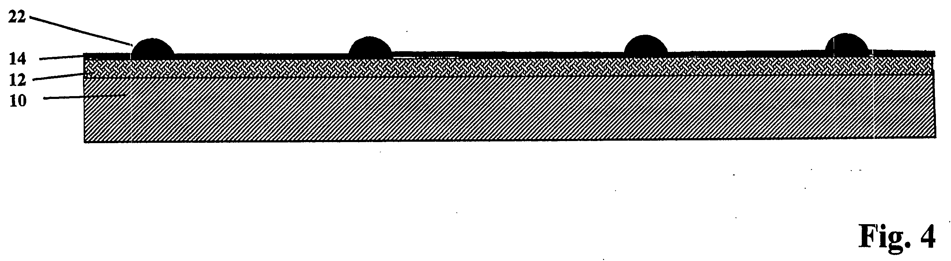

Der in Fig. 4 gezeigte Trennschichtträger hat ein flächiges Substrat 10 aus gestrichenem Papier, auf dessen ebenen, vollflächigen Strich 12 eine Trennschicht 14 aus Silikon aufgedruckt ist, die eine Reliefstruktur 22 hat.

Fig. 4 repräsentiert genauso einen Trennschichtträger, der ein flächiges Substrat 10 aus Papier oder Kunststoff-Folie hat. Das Substrat 10 ist mit einer ebenen, vollflächigen Kunststoffschicht 12 dispersionsbeschichtet, laminiert oder extrusionsbeschichtet. Auf die Kunststoffschicht 12 ist eine Trennschicht 14 aus Silikon aufgedruckt, die eine Reliefstruktur 22 hat.

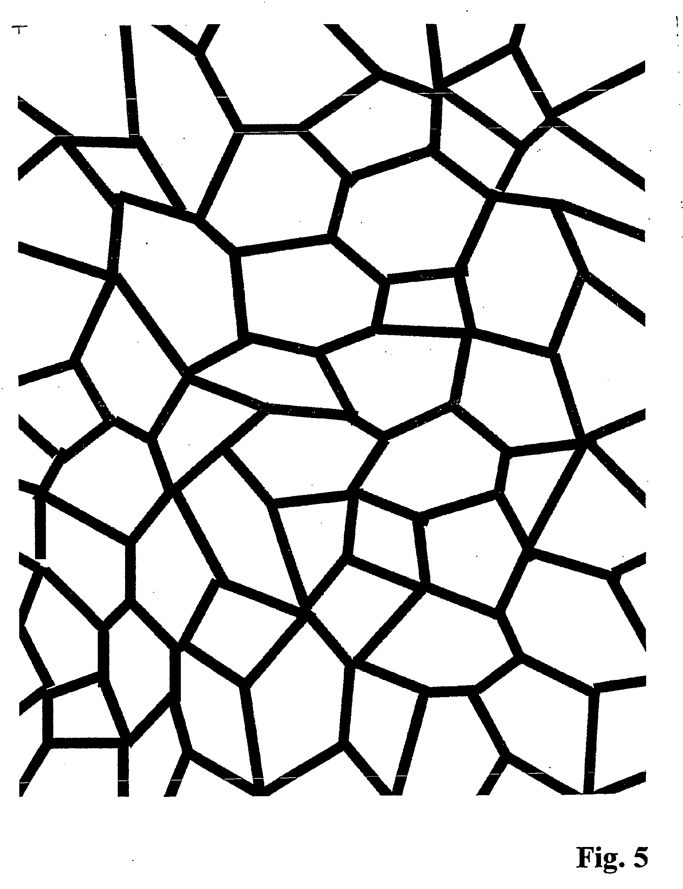

Fig. 5 zeigt die Reliefstruktur.

### Liste der Bezugszeichen

- 10: Substrat
- 12: Strich bzw. Kunststoffbeschichtung
- 14: Trennschicht
- 16: Druckträger
- 18: Aufdruck
- 20: Schicht Haftkleber
- 22: Reliefstruktur

## Patentansprüche

1. Trennschichtträger mit einem flächigen Substrat (10) und einer darauf aufgebrachten Trennschicht (14), der ein Selbsthaftklebematerial mit einer Schicht Haftkleber (20) zu hinterlegen geeignet ist und eine Reliefstruktur (22) mit erhabenen Stegen aufweist, die in der Schicht Haftkleber (20) im wesentlichen komplementäre Kanäle bilden, die beim Aufkleben eingesperrte Luft entweichen lassen, **dadurch gekennzeichnet, daß** die Reliefstruktur (22) eine unregelmäßige Polygonstruktur mit stochastisch geformten und verteilten, eckverbundenen, vier- bis siebeneckigen Polygonen ist.

2. Trennschichtträger nach Anspruch 1, **dadurch gekennzeichnet, daß** die Reliefstruktur (22) Stege mit einer Breite von 50 µm bis 200 µm und einer Höhe von 5 µm bis 40 µm hat.

3. Trennschichtträger nach Anspruch 1 oder 2, **dadurch gekennzeichnet, daß** ein jedes Polygon eine Fläche von 0,5 mm² bis 3 mm² einnimmt.

4. Trennschichtträger nach einem der Ansprüche 1 bis 3, **dadurch gekennzeichnet, daß** das Substrat (10) mit Kunststoff beschichtet und die Reliefstruktur in der Kunststoffbeschichtung (12) ausgebildet ist.

5. Trennschichtträger nach Anspruch 4, **dadurch gekennzeichnet, daß** die Reliefstruktur (22) durch Abkühlen einer auf das Substrat (10) aufextrudierten Kunststoffbeschichtung (12) an einem Kühlzylinder mit zu den Stegen komplementären Vertiefungen erhalten ist.

6. Trennschichtträger nach einem der Ansprüche 1 bis 5, **dadurch gekennzeichnet, daß** das Substrat (10) aus Papier besteht.

7. Trennschichtträger nach einem der Ansprüche 1 bis 5, **dadurch gekennzeichnet, daß** das Substrat (10) aus Kunststoff-Folie besteht.

8. Trennschichtträger nach einem der Ansprüche 1 bis 3, **dadurch gekennzeichnet, daß** das Substrat (10) aus gestrichenem Papier besteht.

9. Trennschichtträger nach Anspruch 8, **dadurch gekennzeichnet, daß** die Reliefstruktur (22) wenigstens zum Teil vom Strich (12) des Papiers gebildet ist.

10. Trennschichtträger nach Anspruch 11 oder 12, **dadurch gekennzeichnet, daß** die Reliefstruktur (22) wenigstens zum Teil von einem Aufdruck auf den Strich (12) des Papiers gebildet ist.

11. Trennschichtträger nach einem der Ansprüche 1 bis 3, **dadurch gekennzeichnet, daß** das Substrat (10) aus mit Kunststoff beschichtetem Papier, Kunststoff-Folie oder mit Kunststoff beschichteter Kunststoff-Folie besteht, und daß die Reliefstruktur (22) von einem Aufdruck auf den Kunststoff gebildet ist.

12. Trennschichtträger nach einem der Ansprüche 1 bis 3, 6 bis 8 oder 11, **dadurch gekennzeichnet, daß** eine vollflächige Trennschicht (14) mit der Reliefstruktur (22) auf das Substrat (10) aufgedruckt ist.

13. Selbsthaftklebematerial mit einem Trennschichtträger nach einem der Ansprüche 1 bis 12.

## Claims

1. An interlayer support comprising a laminar substrate (10) and an interlayer (14) applied thereon, which is suitable for depositing a self-adhesive material provided with a layer of adhesive (20) and comprises a relief structure (22) with raised webs forming substantially complementary channels in the layer of adhesive (20), through which air trapped during adhesion can escape, **characterized in that** the relief structure (22) is an irregular polygonal structure comprising stochastically formed and distributed polygons having between four and seven angles and connected by their angles.

2. The interlayer support according to claim 1, **characterized in that** the relief structure (22) comprises webs having a width of from 50 µm to 200 µm and a height of from 5 µm to 40 µm.

3. The interlayer support according to claim 1 or 2, **characterized in that** each one polygon covers an area of from 0.5 mm² to 3 mm².

4. The interlayer support according to one of claims 1 to 3, **characterized in that** the substrate (10) is coated with plastic and the relief structure (12) is provided in the plastic coating.

5. The interlayer support according to claim 4, **characterized in that** the relief structure (22) is obtained by cooling a plastic coating (12) extruded onto the substrate (10) on a cooling cylinder having recesses which are complementary to the webs.

6. The interlayer support according to one of claims 1 to 5, **characterized in that** the substrate (10) comprises paper.

7. The interlayer support according to one of claims 1 to 5, **characterized in that** the substrate (10) comprises plastic film.

8. The interlayer support according to one of claims 1 to 3, **characterized in that** the substrate (10) comprises coated paper.

9. The interlayer support according to claim 8, **characterized in that** the relief structure (22) is at least partly provided by the coating (12) of the paper.

10. The interlayer support according to claim 11 or 12, **characterized in that** the relief structure (22) is at least partly provided by an imprint on the coating (12) of the paper.

11. The interlayer support according to one of claims 1 to 3, **characterized in that** the substrate (10) comprises plastic coated paper, plastic film or plastic coated plastic film, and that relief structure (22) is provided by an imprint on the plastic.

12. The interlayer support according to one of claims 1 to 3, 6 to 8 or 11, **characterized in that** an interlayer (14) is imprinted on the substrate (10) with the relief structure (22) covering the entire surface.

13. Self-adhesive material comprising an interlayer support according to one of claims 1 to 12.

## Revendications

1. Support de couche de séparation, avec un substrat mince (10) sur lequel est appliquée une couche de séparation (14), qui est adapté à un matériau auto-adhésif avec une couche de colle de contact (20) et qui comporte une structure en relief (22) avec des traverses en relief formant essentiellement des canaux complémentaires dans la couche de colle de contact (20), ces canaux laissant échapper de l'air enfermé lors du collage, **caractérisé en ce que** la structure en relief (22) est une structure polygonale, avec des polygones à quatre ou sept angles, reliés par les coins, formés et répartis de façon stochastique.

2. Support de couche de séparation selon la revendication 1, **caractérisé en ce que** la structure en relief (22) possède des traverses d'une largeur de 50 à 200 µm et d'une hauteur de 5 à 40 µm.

3. Support de couche de séparation selon la revendication 1 ou 2, **caractérisé en ce que** chaque polygone définit une surface comprise entre 0,5 mm² et 3 mm².

4. Support de couche de séparation selon l'une des revendications 1 à 3, **caractérisé en ce que** le substrat (10) est couvert d'une matière plastique et **en ce que** la structure en relief est formée dans le revêtement en matière plastique (12).

5. Support de couche de séparation selon la revendication 4, **caractérisé en ce que** la structure en relief (22) est obtenue par le refroidissement d'un revêtement en matière plastique (12) extrudé sur le substrat (10), sur un cylindre de refroidissement avec des renfoncements complémentaires aux traverses.

6. Support de couche de séparation selon l'une des revendications 1 à 5, **caractérisé en ce que** le substrat (10) est constitué de papier.

7. Support de couche de séparation selon l'une des revendications 1 à 5, **caractérisé en ce que** le substrat (10) est constitué d'un film synthétique.

8. Support de couche de séparation selon l'une des revendications 1 à 5, **caractérisé en ce que** le substrat (10) est constitué d'un papier couché.

9. Support de couche de séparation selon la revendication 8, **caractérisé en ce que** la structure en relief (22) est formée au moins partiellement par la couche (12) du papier.

10. Support de couche de séparation selon la revendication 11 ou 12, **caractérisé en ce que** la structure en relief (22) est au moins partiellement formée par une impression sur la couche (12) du papier.

11. Support de couche de séparation selon l'une des revendications 1 à 3, **caractérisé en ce que** le substrat (10) est constitué de papier recouvert de matière plastique, de film synthétique ou de film synthétique recouvert de plastique, et **en ce que** la structure en relief (22) est formée par une impression sur la matière plastique.

12. Support de couche de séparation selon l'une des revendications 1 à 3, 6 à 8 ou 11, **caractérisé en ce qu'**une couche de séparation (14) présente sur l'ensemble de la surface est imprimée avec la structure en relief (22) sur le substrat (10).

13. Matériau auto-adhésif avec un support de couche de séparation selon l'une des revendications 1 à 12.
